# EUROPÄISCHE PATENTANMELDUNG

(11) **EP 4 775 940 A1**
(43) Veröffentlichungstag der Anmeldung: **15.07.2026**
(21) Anmeldenummer: 26150400.5
(22) Anmeldetag: 06.01.2026
(51) Int. Cl.: G01J 5/48, G01J 5/90, G01K 17/20

(54) **VERFAHREN UND SYSTEM ZUR BESTIMMUNG EINES WÄRMEDURCHGANGSKOEFFIZIENTEN EINES GEBÄUDEELEMENTS**

(30) Priorität: 09.01.2025 DE 102025100621
(71) Anmelder: SCHÜCO International KG, 33609 Bielefeld (DE)
(72) Erfinder: TONN, Sebastian, 33611 Bielefeld (DE); BIELEFELD, Hans-Walter, 33649 Bielefeld (DE)
(74) Vertreter: Kleine, Hubertus

(57) **Zusammenfassung**

Die Erfindung betriff ein Verfahren zur Bestimmung eines Wärmedurchgangskoeffizienten eines Gebäudeelements, aufweisend die folgenden Schritte:
- Bereitstellen mindestens einer Referenzbox (20) extern von einem Gebäude (10), wobei die mindestens eine Referenzbox (20) einen allseitig durch Seitenwände (21) geschlossenen Hohlraum aufweist, wobei mindestens ein Teil einer der Seitenwände (21) durch mindestens ein Referenzelement (22), dessen Wärmedurchgangskoeffizient bekannt ist, gebildet ist und wobei in dem Hohlraum ein Temperatursensor (23) und ein Heizelement (24) angeordnet sind;
- Ermitteln einer Temperatur (T_{G}) in dem Gebäude (10);
- Übertragen eines ermittelten Wertes der Temperatur (T_{G}) in dem Gebäude (10) an eine der mindestens einen Referenzbox (20) zugeordneten Steuereinrichtung (25);
- Einstellen einer Temperatur (T_{B}) in dem Hohlraum der mindestens einen Referenzbox (20) auf den übertragenen Wert der Temperatur (T_{G}) in dem Gebäude (10) durch die Steuereinrichtung (25) und unter Verwendung des Temperatursensors (23) und des Heizelements (24);
- Aufnehmen mindestens eines Wärmebildes von zumindest dem Gebäudeelement;
- Aufnehmen mindestens eines Wärmebildes von dem mindestens einen Referenzelement (22); und
- Ermitteln des Wärmedurchgangskoeffizienten des Gebäudeelements anhand eines Vergleichs der Darstellung des Gebäudeelements und des mindestens einen Referenzelements (22) in dem mindestens einen Wärmebild.

Die Erfindung betrifft weiter ein System zur Bestimmung eines Wärmedurchgangskoeffizienten eines Gebäudeelements eines Gebäudes (10).

## Beschreibung

Die Erfindung betrifft ein Verfahren und ein System zur Bestimmung eines Wärmedurchgangskoeffizienten eines Gebäudeelements, insbesondere einer Verglasung oder eines Fensters, basierend auf einem Erfassen und Auswerten mindestens eines Wärmebildes.

Anhand von Wärmebildern können schnell und nicht-invasiv Wärmebrücken und damit Wärmeverluste eines Gebäudes identifiziert werden. Die Wärmebilder können dabei entweder vom Boden aus oder auch mit Flugdrohnen mit Infrarot (IR)-Kameras aufgenommen werden. Häufig erfolgt eine Auswertung allerdings eher qualitativ dahingehend, dass Teile der Gebäudehülle, die in der Abbildung als wärmer angegeben werden, als Wärmebrücken identifiziert werden. Quantitative Angaben, zum Beispiel eine Ermittlung eines Wärmedurchgangskoeffizienten für bestimmte Gebäudeelemente wie z.B. Fenster, sind anhand der Wärmebilder jedoch nur schwer zu bestimmen. Wärmedurchgangskoeffizienten können in der Regel nur geschätzt werden, wobei Referenztabellen, in denen bekannte Wärmedurchgangskoeffizienten, auch u-Werte genannt, von verschiedenen Gebäudeelementen gelistet sind, als Ausgangspunkt für die Schätzung dienen können.

Die Schätzung wird allerdings durch eine Vielzahl von beeinflussenden Parametern erschwert, beispielsweise die Einbaulage der Gebäudeelemente (Dachfenster verhalten sich beispielsweise anders als vertikal eingebaute Fenster) und die aktuell herrschenden Umweltbedingungen, beispielsweise Lufttemperatur, Wind, Sonneneinstrahlung usw.

Die Druckschrift DE 10 2018 114 310 B4 beschreibt ein Verfahren zur Aufnahme von Wärmebildern mithilfe einer Flugdrohne, bei dem neben den Wärmebildern weitere Zustandsdaten einer Oberfläche eines Objekts, z.B. eines Gebäudes, durch die Flugdrohne erfasst werden, z.B. durch zusätzlich aufgenommene Bilddaten im sichtbaren Spektralbereich. Zudem werden die von der Flugdrohne aufgenommenen Daten mit zusätzlichen Informationen, z.B. Lageinformationen zu dem Objekt und/oder Wetter- und Temperaturinformationen, verknüpft. Durch eine korrelierte Auswertung der miteinander verknüpften Informationen kann eine gesteigerte Datensicherheit erreicht werden.

Erst eine möglichst gute quantitative Bestimmung von Wärmedurchgangskoeffizienten ermöglicht jedoch eine realistische Einschätzung der tatsächlichen Energieeinsparung, die mit einer möglichen Maßnahme zur energetischen Sanierung erzielt werden kann.

Ein Verfahren zur quantitativen Bestimmung von Wärmedurchgangskoeffizienten anhand von Wärmebildern ist aus der Druckschrift EP 4 421 465 A1 bekannt. Dabei wird die Gebäudehülle mithilfe eines mathematischen Modells beschrieben, wobei die Gebäudehülle durch ein Netzwerk aus thermischen Widerstandselementen und Kapazitätselementen modelliert wird. Nach einer Kalibrierung des Modells anhand von Umgebungsbedingungen auf der Innen- und/oder der Außenseite der Gebäudehülle können Wärmedurchgangskoeffizienten für verschiedene Elemente der Gebäudehülle anhand des Modells und aufgezeichneter Wärmebilder ermittelt werden. Das Verfahren ist jedoch mathematisch aufwendig und setzt das individuelle Erstellen eines geeigneten mathematischen Modells für das betreffende Gebäude bzw. die betreffende Gebäudehülle und damit auch Kenntnis des Aufbaus der Gebäudehülle voraus.

Es ist eine Aufgabe der vorliegenden Erfindung, ein Verfahren und ein System zur Ermittlung von Wärmedurchgangskoeffizienten von Elementen einer Gebäudehülle zu schaffen, bei denen anhand von einem oder mehreren Wärmebildern für bestimmte Elemente der Gebäudehülle ein Wärmedurchgangskoeffizienten möglichst gut qualitativ ermittelt werden kann, ohne nähere Kenntnis des Aufbaus der Gebäudehülle zu benötigen.

Diese Aufgabe wird durch ein Verfahren und ein System mit den Merkmalen des jeweiligen unabhängigen Anspruchs gelöst. Vorteilhafte Ausgestaltungen und Weiterbildungen sind in den abhängigen Ansprüchen angegeben.

Ein erfindungsgemäßes Verfahren zur Bestimmung eines Wärmedurchgangskoeffizienten eines Gebäudeelements weist die folgenden Schritte auf: Es wird mindestens eine Referenzbox extern von einem Gebäude bereitgestellt, insbesondere auf und/oder neben dem Gebäude, wobei die mindestens eine Referenzbox einen allseitig durch Seitenwände geschlossenen Hohlraum aufweist, wobei mindestens ein Teil einer der Seitenwände durch mindestens ein Referenzelement, dessen Wärmedurchgangskoeffizient bekannt ist, gebildet ist und wobei in dem Hohlraum ein Temperatursensor und ein Heizelement angeordnet sind. Es wird weiter eine Temperatur in dem Gebäude ermittelt und ein ermittelter Wert der Temperatur in dem Gebäude an eine der mindestens einen Referenzbox zugeordnete Steuereinrichtung übertragen. Dann wird eine Temperatur in dem Hohlraum der mindestens einen Referenzbox auf den übertragenen Wert der Temperatur in dem Gebäude durch die Steuereinrichtung und unter Verwendung des Temperatursensors und des Heizelements eingestellt und mindestens ein Wärmebild von zumindest dem Gebäudeelement und dem mindestens einen Referenzelement erstellt. Schließlich wird der Wärmedurchgangskoeffizient des Gebäudeelements anhand eines Vergleichs der Darstellung des Gebäudeelements und des mindestens einen Referenzelements in dem mindestens einen Wärmebild bestimmt.

Durch die Übertragung der im Gebäude gemessenen Temperatur an die Referenzbox und das integrierte Heizelement kann die Temperatur in der Referenzbox der des Gebäudeinneren angeglichen werden. Da die Referenzbox extern von dem Gebäude bereitgestellt wird sind auch die Umgebungsbedingungen mit der des Gebäudes vergleichbar. Somit wird im Hinblick auf einen Wärmedurchgang die Situation des Gebäudeelements auf das Referenzelement gespielt. In dem oder den aufgenommene Wärmebild(ern) werden das Element und das entsprechend unter gleichen thermischen Bedingungen aufgenommene Referenzelement zum Beispiel in einem Falschfarbenbild dargestellt.

Die Darstellungen der beiden Elemente sind wegen der gleichen thermischen Bedingungen unmittelbar miteinander vergleichbar. Aufgrund des bekannten Wärmedurchgangskoeffizienten des Referenzdemenz kann so direkt und mit geringem Fehler auf den Wärmedurchgangskoeffizienten des Gebäudeelements geschlossen werden. Das betreffende Gebäudeelement und das mindestens eine Referenzelement können dabei gemeinsam auf einem Wärmebild abgebildet sein oder auch auf verschiedenen Wärmebildern, die dann bevorzugt unter vergleichbaren Aufnahmebedingungen erstellt werden.

Bei einer vorteilhaften Ausgestaltung des Verfahrens werden mindestens zwei Referenzelemente eingesetzt, die sich in ihrem Wärmedurchgangskoeffizienten unterscheiden. Die Referenzelemente können beispielsweise nebeneinander an einer Seitenwand der mindestens einen Referenzbox angeordnet sein oder an unterschiedlichen Seitenwänden der mindestens einen Referenzbox angeordnet sein. Es ist auch möglich, mehrere Referenzboxen zu verwenden, an denen die verschiedenen Referenzelemente angeordnet sind. Durch die Wärmedurchgangskoeffizienten der verschiedenen Referenzelemente kann eine individuell kalibrierte Skale für Wärmedurchgangskoeffizienten für das mindestens eine Wärmebild erstellt werden.

Weiter ist es vorteilhat, die mindestens eine Referenzbox benachbart zu dem Gebäude aufzustellen, bevorzugt so, dass eine Ausrichtung des mindestens einen Referenzelements einer Ausrichtung des Gebäudeelements, für das der Wärmedurchgangskoeffizient bestimmt wird, entspricht. Auf diese Weise stimmen die Umgebungsbedingungen für Gebäude und Referenzbox möglichst gut überein. Die mindestens eine Referenzbox kann bevorzugt auf einem Fahrzeugchassis montiert sein, so dass sie schnell und flexibel in eine geeignete Position gebracht werden kann. Das Fahrzeugchassis kann in dem Fall die mindestens eine Referenzbox auch mit elektrischer Energie für das Heizelement versorgen. Alternativ kann ein Netzanschluss an der Referenzbox vorgesehen sein oder eine integrierte wiederaufladbare Energie. Falls genügend Heizenergie zur Verfügung steht (z.B. bei der fahrzeugmontierten Referenzbox), kann vorgesehen sein, die Referenzbox vor dem endgültigen Positionieren bereist auf typische Raumtemperaturen vorzuheizen, um die Zeit, bis sich die exakte Gebäudetemperatur eingestellt hat, zu minimieren.

Bei einer weiteren vorteilhaften Ausgestaltung des Verfahrens ist das Gebäudeelement ein Fenster des Gebäudes und das mindestens eine Referenzelement weist eine für Gebäude geeignete Verglasung auf. Die so mögliche Bestimmung von Wärmedurchgangskoeffizienten von Bestandsfenstern in Gebäuden erlaubt ein quantitative Aussage zur Effektivität des Austauschens der Fenster mit besser wärmeisolierten Fenstern. Neben diesem Einsatzzweck lassen sich jedoch auch andere Gebäudeelemente, z.B. Türen, Wandelemente oder Fassadenelemente, mit entsprechenden Referenzelementen ausmessen.

Bei einer weiteren vorteilhaften Ausgestaltung des Verfahrens wird die Temperatur in dem Gebäude automatisiert gemessen und an die Steuereinrichtung der mindestens einen Referenzbox übertragen. Zu diesem Zweck kann in dem Gebäude ein Temperatursensor angeordnet sein, der die Gebäude-Innentemperatur misst und mit einem speziellen Sender verbunden ist, über den die gemessene Temperatur an die Steuereinrichtung der Referenzbox(en) übertragen wird. Die Übertragung kann über ein beliebiges Funkprotokoll erfolgen, das proprietär sein kann oder sich eines bekannten Protokolls bedient, z.B. WLAN (Wireless Lokal Area Network) oder LoRa-WAN (Long Range Wide Area Network).

Anstelle einer speziell für den erfindungsgemäßen Zweck vorgesehenen Temperaturmessung und -übertragung ist es auch möglich, auf eine innerhalb des Gebäudes sowieso vorliegende Temperaturmessung zurückzugreifen. Beispielsweise können Temperaturmessungen durch ein Heizsystem des Gebäudes und/oder ein im Gebäude installiertes Smart-Home-System vorgenommen werden und extrahiert werden. Dabei ist es denkbar, dass ein Internet-basierter Zugang zu den Temperaturmessungen unmittelbar von der Steuereinrichtung der Referenzbox(en) ermöglicht wird. Auch ist es denkbar, dass die Steuereinrichtung der Referenzbox(en) drahtlos mit einem Mobilgerät (Handy, Tablet) kommuniziert (z.B. über WLAN oder Bluetooth) und das Mobilgerät Zugang zu den Temperaturmessungen des Gebäudes hat und die gemessene Temperatur entsprechend an die Referenzbox(en) weiterleitet.

Alternativ ist es auch denkbar, die Temperatur im Gebäude manuell zu messen und in die Steuereinrichtung einzugeben.

Zum Einstellen der Temperatur im Hohlraum der Referenzbox wird bevorzugt ein Regelkreis benutzt, bei dem eine Ansteuerung des Heizelements anhand der Temperaturdifferenz zwischen gemessener Ist-Temperatur im Hohlraum und der gewünschten Soll-Temperatur, also der Temperatur im Gebäude, erfolgt. Dabei kann ein PI (proportional/integral) - oder PID (proportional/integralldifferential) - Regelkreis Verwendung finden.

Zu Aufnahme des mindestens einen Wärmebilds ist eine Flugdrohne mit einer Wärmebildkamera besonders geeignet. Bevorzugt werden parallel zu den Wärmebildern Bilder im sichtbaren Spektralbereich aufgenommen, was die Identifizierung der relevanten Gebäudeelemente vereinfacht. Anstelle einer (unbemannten) Flugdrohne können auch aus einem bemannten Fluggerät (Flugzeug, Hubschrauber) Wärmebilder aufgenommen werden. Als Wärmebildkamera kann auch eine handgeführte bzw. auf einem Stativ stehende Kamera verwendet werden oder es kann bei ausreichender Auflösung auch auf Wärmebildkameras von Satelliten zurückgegriffen werden.

Ein erfindungsgemäßes System zur Bestimmung eines Wärmedurchgangskoeffizienten eines Gebäudeelements eines Gebäudes umfasst mindestens eine extern von dem Gebäude aufstellbare Referenzbox, die einen allseitig durch Seitenwände geschlossenen Hohlraum aufweist, wobei mindestens ein Teil einer der Seitenwände durch mindestens ein Referenzelement gebildet ist und wobei in dem Hohlraum ein Temperatursensor zur Messung einer Temperatur und ein Heizelement angeordnet sind, die mit einer Steuereinrichtung gekoppelt sind. Die Steuereinrichtung ist dazu eingerichtet, das Heizelement so anzusteuern, dass die Temperatur einer vorgebbaren Temperatur entspricht. Weiter umfasst das System eine Anordnung zur Messung einer Temperatur in dem Gebäude und zur Übertragung eines ermittelten Wertes der Temperatur in dem Gebäude an die Steuereinrichtung sowie eine Wärmebildkamera zur Aufzeichnung mindestens einen Wärmebilds.

Bevorzugt ist die Wärmebildkamera an einer Flugdrohne angeordnet. Weiter bevorzugt weist das System mindestens zwei Referenzelemente auf. Besonders bevorzugt weist das mindestens eine Referenzelement eine für ein Gebäude geeignete Verglasung auf, um den Wärmedurchgangskoeffizienten von Bestandsfenstern des Gebäudes zu bestimmen.

Es ergeben sich bei dem System die im Zusammenhang mit dem Verfahren zuvor geschilderten Vorteile.

Die Erfindung wird nachfolgend anhand eines Ausführungsbeispiels mithilfe von Figuren näher erläutert. Die Figuren zeigen:
- Figur 1: eine schematische Darstellung eines Gebäudes mit einem System zur Durchführung eines Verfahrens zur Bestimmung von Wärmedurchgangskoeffizienten von Fenstern des Gebäudes;
- Figur 2: eine schematische Blockdarstellung der Anordnung der Figur 1; und
- Figur 3: ein Ausführungsbeispiel eines Verfahrens zur Bestimmung von Wärmedurchgangskoeffizienten in einem Ablaufdiagramm.

In allen Figuren kennzeichnen gleiche Bezugszeichen gleiche oder gleichwirkende Elemente. Aus Gründen der Übersichtlichkeit sind in den Figuren nicht zwingend alle Elemente mit einem Bezugszeichen versehen.

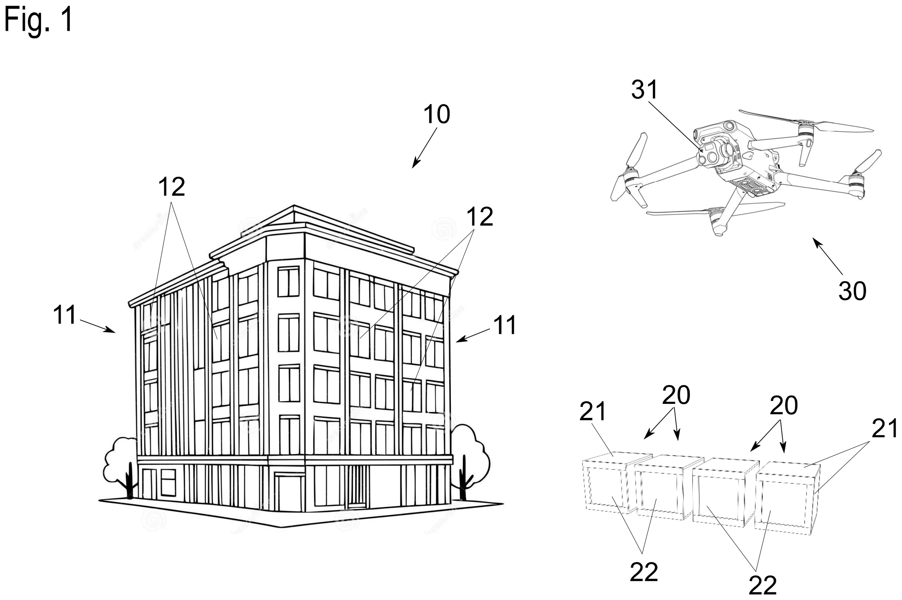

Figur 1 zeigt zunächst in einer räumlichen Gesamtansicht ein Gebäude 10, dessen Gebäudehülle 11 eine Vielzahl von Fenstern 12 aufweist.

Von diesem Gebäude 10 werden bei einem erfindungsgemäßen Verfahren Wärmebilder aufgenommen, was im gezeigten Beispiel mithilfe einer Flugdrohne 30 erfolgt, die über eine Wärmebildkamera 31, bevorzugt eine IR (Infrarot) -Kamera, verfügt. Es wird angemerkt, dass das in dieser Anmeldung dargestellte Verfahren auch mithilfe einer bodenbasierten Wärmebildkamera, beispielsweise einer Handkamera, durchgeführt werden kann.

Erfindungsgemäß ist in einer unmittelbaren Nähe des Gebäudes 10 eine Anzahl von Referenzboxen 20 aufgestellt, bevorzugt derart, dass sie vergleichbaren Umweltbedingungen ausgesetzt sind wie das Gebäude 10. Beispielhaft sind in dem dargestellten Ausführungsbeispiel vier Referenzboxen 20 vorhanden. Diese Anzahl ist rein beispielhaft, es können auch mehr oder weniger als die dargestellte Anzahl von Referenzboxen 20 verwendet werden.

Die Referenzboxen 20 sind im dargestellten Ausführungsbeispiel würfelförmig, wobei auch andere Formen, beispielsweise Quader mit unterschiedlichen Seitenlängen möglich sind.

Die Referenzboxen 20 weisen einen abgeschlossenen Hohlraum auf, der allseits von Seitenwänden 21 begrenzt wird. Eine der Seitenwände 21 wird von einem Referenzelement 22 gebildet, das eine für die Gebäudeverglasung geeignete und handelsübliche Verglasung aufweist, insbesondere eine Doppel- oder Dreifachverglasung. Die thermischen Eigenschaften, insbesondere der Wärmedurchgangskoeffizienten (U-Wert) der Verglasung des Referenzelements 22 sind bevorzugt bekannt. Wenn mehrere Referenzboxen 20 verwendet werden, sind sie bevorzugt mit Referenzelementen 22 mit unterschiedlichen Verglasungen ausgestattet, beispielsweise unterschiedliche Typen von im Handel angebotenen Glasscheiben für die Verwendung in Gebäuden.

Die neben dem Gebäude 10 aufgestellten Referenzboxen 20 werden bei Aufnahme eines Wärmebilds durch die Flugdrohne 30 mit deren Wärmebildkamera 31 zusammen mit dem Gebäude 10 oder zumindest Teilen des Gebäudes 10 erfasst und abgebildet. Dieses ermöglicht ein Vergleich der Messwerte der Wärmebildkamera 31 des Fensters 12 des Gebäudes 10 mit den (gegebenenfalls verschiedenen) Verglasungen der Referenzelemente 22 der Referenzbox(en) 20.

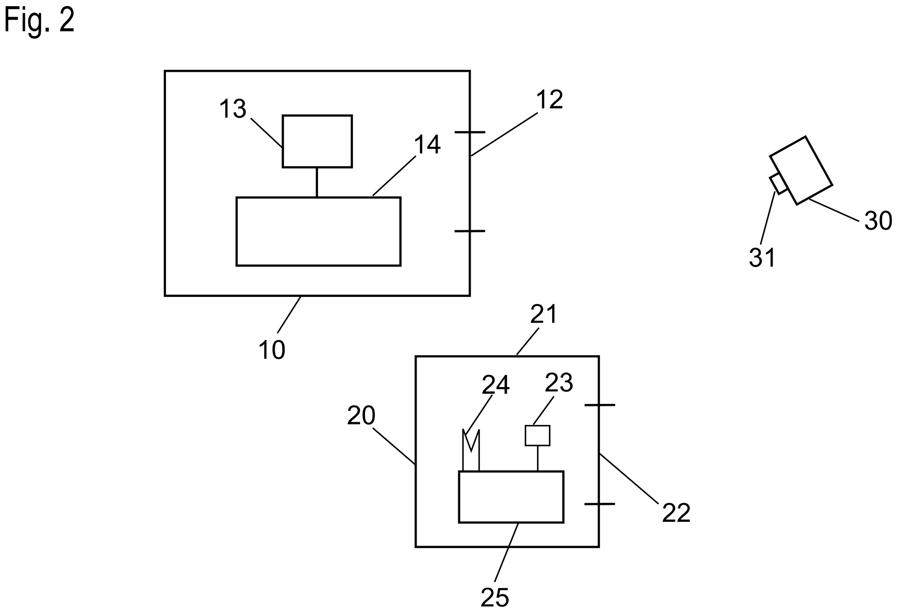

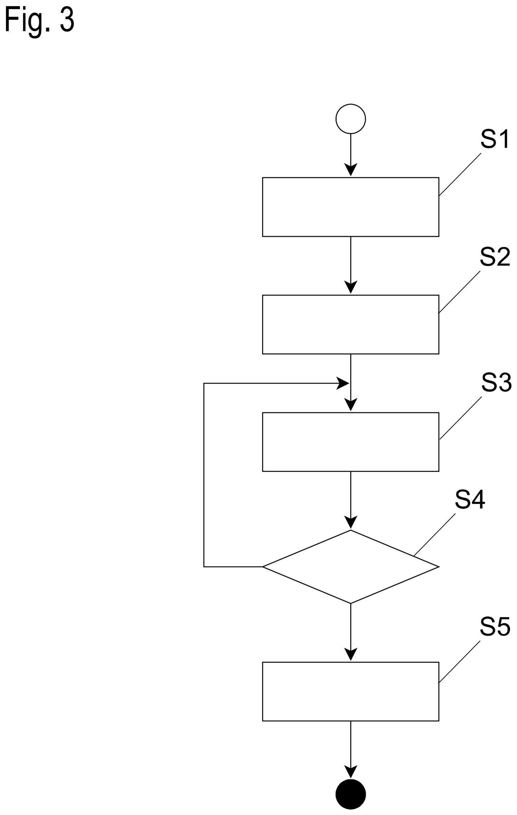

Um diesen Vergleich aussagekräftig zu machen, wird erfindungsgemäß in den Referenzboxen 20 jeweils eine Temperatur eingestellt, die der Temperatur im Gebäude 10 und insbesondere in einem Raum hinter den betrachteten Fenstern 12 entspricht. Diese Vorgehensweise wird nachfolgend im Zusammenhang mit den Figuren 2 und 3 näher erläutert.

Die Figur 2 zeigt dazu die Anordnung der Figur 1 schematisch in einer Art Schnittdarstellung, wobei hier nur eine Referenzbox 20 wiedergegeben ist. Von dem Gebäude 10 ist ein Raum dargestellt, dem eines der betrachteten Fenster 12 zugeordnet ist. In dem Raum wird ein Gebäudetemperatursensor 13 angeordnet, der mit einem Sender 14 verbunden ist. Messwerte der von dem Gebäudetemperatursensor 13 gemessenen Gebäudetemperatur T_{G} im Inneren des Gebäudes 10 werden von dem Sender 14 übertragen.

Die Referenzbox 20 umfasst eine Anordnung aus einem Temperatursensor 23, einem Heizelement 24, einer Steuereinrichtung 25 und einem Empfänger 26. Zum Betreiben dieser Anordnung ist die mindestens eine Referenzbox 20 entweder extern über ein Netzkabel mit Energie versorgt oder weist eine interne Stromquelle, beispielsweise eine wiederaufladbare Batterie, auf. Die Steuereinrichtung 25 kann in oder an der Referenzbox 20 angeordnet sein oder ein externes Gerät sein, das einer oder mehreren Referenzbox(en) 20 zugeordnet ist.

Der Empfänger 26 empfängt die von dem Sender 14 übertragenen Informationen zur Gebäudetemperatur T_{G} innerhalb des Gebäudes 10. Der Empfänger 26 gibt die empfangenen Informationen an die Steuereinrichtung 25 weiter, die diese mit einer vom Temperatursensors 23 innerhalb der Referenzbox 20 gemessenen Temperatur T_{B} vergleicht und abhängig von einem Ergebnis des Vergleichs in einem Regelkreis das Heizelement 24 so ansteuert, dass die in der Referenzbox 20 gemessene Temperatur T_{B} der gemessenen Gebäudetemperatur T_{G} im Gebäude 10 entspricht.

Auf diese Weise wird sichergestellt, dass innerhalb der Referenzbox 20 vergleichbare Bedingungen herrschen wie innerhalb des Gebäudes 10 bzw. des Raumes hinter einem der betrachteten Fenster 12. Zudem wird bevorzugt die Referenzbox 20 so ausgerichtet, dass das Referenzelement 20 eine vergleichbare Ausrichtung im Hinblick auf die Himmelsrichtung und auch ihre Neigung aufweist wie das Fenster 12 im Gebäude 10.

Das von der Flugdrohne 30 aufgenommene Wärmebild des Referenzelementes 22 kann damit unmittelbar als Referenzbild zur Bewertung der Fenster 12 des Gebäudes 10 verwendet werden. Insbesondere wenn verschieden verglaste Referenzelemente 22 in unterschiedlichen Referenzboxen 20 (oder in einer Referenzbox 20 - s.u.) zur Verfügung stehen, kann eine Farbskala des Wärmebilds anhand der bekannten Wärmedurchgangskoeffizienten der Referenzelemente 22 kalibriert werden, sodass eine quantitative Bestimmung der Wärmedurchgangskoeffizienten der Fenster 12 des Gebäudes 10 möglich ist.

Es ist auch denkbar, dass in einer Referenzbox 20 unterschiedliche Verglasungen vorhanden sind, entweder an unterschiedlichen Seitenwänden 21 der Referenzbox 20 oder auch nebeneinander an einer der Seitenwände 21. Anstelle von mehrerer Referenzboxen 20 mit unterschiedlichen Verglasungen kann dann auch eine Referenzbox 20 mit verschiedenen Referenzelementen 22 bzw. verschiedenen Verglasungen eingesetzt werden.

Das Verfahren ist in Figur 3 auch nochmals in einem Ablaufdiagramm wiedergegeben und wird nachfolgend mit Verweis auf die Anordnung der Figuren 1 und 2 erläutert.

Nach einem Start des Verfahrens wird in einem ersten Schritt S1 ein Gebäudetemperatursensor 13 und ein Sender 14 in einem oder in mehreren Räumen des Gebäudes 10 positioniert. Weiter werden in einem nächsten Schritt S2 ein oder mehrere Referenzboxen 20 außerhalb des Gebäudes 10 vor der Gebäudehülle 11 mit bevorzugt vergleichbarer Ausrichtung wie relevante Abschnitte der Gebäudehülle 11 aufgestellt.

In einem Schritt S3 werden gemessenen Temperaturen des Gebäudetemperatursensors 13 über den Sender 14 an die Referenzbox 20 oder die Referenzboxen 20 übertragen. Die Übertragung kann unmittelbar von dem Sender 14 an den Empfänger 26 erfolgen, z.B. über eine Bluetooth-Verbindung. Es ist aber auch denkbar, dass der Sender 14 über ein gemeinsames Netzwerk (Internet oder Intranet) miteinander gekoppelt sind.

Die Temperatur innerhalb der Referenzbox 20 bzw. der Referenzboxen 20 wird dann mithilfe der jeweiligen Steuereinrichtung 25 und des integrierten Heizelement 24 so geregelt, dass die Temperatur T_{B} in der oder den Referenzboxen 20 der Gebäudetemperatur T_{G} im Gebäude 10 entspricht. In einem Schritt S4 wird abgefragt, ob die beiden Temperaturen T_{B}, T_{G} innerhalb eines gewissen Toleranzbereichs gleich sind. Das Verfahren wird erst dann mit einem folgenden Schritt S5 fortgeführt, wenn die Temperatur T_{B} an die Gebäudetemperatur T_{G} angeglichen ist.

In dem Schritt S5 werden dann von der Flugdrohne 30 mithilfe ihrer Wärmebildkamera 31 Wärmebildaufnahmen von dem Gebäude 10 (bzw. von relevanten Bereichen der Gebäudehülle 11 mit einem oder mehreren Fenstern 12) und auch von den Referenzboxen 20 mit deren Referenzelementen 22 aufgezeichnet und entweder per Funk an eine Auswerteeinheit gesendet oder zur späteren Auswertung innerhalb der Flugdrohne 30 gespeichert.

### Bezugszeichen

- 10: Gebäude
- 11: Gebäudehülle
- 12: Fenster
- 13: Gebäudetemperatursensor
- 14: Sender

- 20: Referenzbox
- 21: Seitenwand
- 22: Referenzelement
- 23: Temperatursensor
- 24: Heizelement
- 25: Steuereinrichtung
- 26: Empfänger

- 30: Flugdrohne
- 31: Wärmebildkamera

- T_{R}: Gebäudetemperatur
- T_{B}: Temperatur (in der Referenzbox)

## Patentansprüche

1. Verfahren zur Bestimmung eines Wärmedurchgangskoeffizienten eines Gebäudeelements, aufweisend die folgenden Schritte:
- Bereitstellen mindestens einer Referenzbox (20) extern von einem Gebäude (10), wobei die mindestens eine Referenzbox (20) einen allseitig durch Seitenwände (21) geschlossenen Hohlraum aufweist, wobei mindestens ein Teil einer der Seitenwände (21) durch mindestens ein Referenzelement (22), dessen Wärmedurchgangskoeffizient bekannt ist, gebildet ist und wobei in dem Hohlraum ein Temperatursensor (23) und ein Heizelement (24) angeordnet sind;
- Ermitteln einer Temperatur (T_{G}) in dem Gebäude (10);
- Übertragen eines ermittelten Wertes der Temperatur (T_{G}) in dem Gebäude (10) an eine der mindestens einen Referenzbox (20) zugeordneten Steuereinrichtung (25);
- Einstellen einer Temperatur (T_{B}) in dem Hohlraum der mindestens einen Referenzbox (20) auf den übertragenen Wert der Temperatur (T_{G}) in dem Gebäude (10) durch die Steuereinrichtung (25) und unter Verwendung des Temperatursensors (23) und des Heizelements (24);
- Aufnehmen mindestens eines Wärmebildes von zumindest dem Gebäudeelement;
- Aufnehmen mindestens eines Wärmebildes von dem mindestens einen Referenzelement (22); und
- Ermitteln des Wärmedurchgangskoeffizienten des Gebäudeelements anhand eines Vergleichs der Darstellung des Gebäudeelements und des mindestens einen Referenzelements (22) in dem mindestens einen Wärmebild.

2. Verfahren nach Anspruch 1, bei dem mindestens zwei Referenzelemente (22) eingesetzt werden.

3. Verfahren nach Anspruch 2, bei dem die mindestens zwei Referenzelemente (22) nebeneinander an einer Seitenwand (21) der mindestens einen Referenzbox (20) angeordnet sind oder an unterschiedlichen Seitenwänden (21) der mindestens einen Referenzbox (20) angeordnet sind.

4. Verfahren nach Anspruch 2, bei dem die mindestens zwei Referenzelemente (22) an unterschiedlichen Referenzboxen (20) angeordnet sind.

5. Verfahren nach einem der Ansprüche 1 bis 4, bei dem das Gebäudeelement ein Fenster des Gebäudes (10) ist und bei dem das mindestens eine Referenzelement (22) eine für ein Gebäude (10) geeignete Verglasung aufweist.

6. Verfahren nach einem der Ansprüche 1 bis 5, bei dem die Temperatur (T_{G}) in dem Gebäude (10) automatisiert gemessen und an die Steuereinrichtung (25) der mindestens einen Referenzbox (20) übertragen wird.

7. Verfahren nach einem der Ansprüche 1 bis 6, bei dem die mindestens eine Referenzbox benachbart zu dem Gebäude (10) aufgestellt wird.

8. Verfahren nach einem der Ansprüche 1 bis 6, bei dem die mindestens eine Referenzbox (20) so aufgestellt wird, dass eine Ausrichtung des mindestens einen Referenzelemente (22) einer Ausrichtung des Gebäudeelements, für das der Wärmedurchgangskoeffizient bestimmt wird, entspricht.

9. Verfahren nach einem der Ansprüche 1 bis 8, bei dem die mindestens eine Referenzbox (20) so ausgerichtet wird, dass benachbart zu dem Gebäude (10) aufgestellt wird.

10. Verfahren nach einem der Ansprüche 1 bis 9, bei dem das mindestens eine Wärmebild von einer Wärmebildkamera (31) einer Flugdrohne (30) aufgenommen wird.

11. System zur Bestimmung eines Wärmedurchgangskoeffizienten eines Gebäudeelements eines Gebäudes (10), aufweisend
- mindestens eine extern von dem Gebäude (10) aufstellbare Referenzbox (20), die einen allseitig durch Seitenwände (21) geschlossenen Hohlraum aufweist, wobei mindestens ein Teil einer der Seitenwände (21) durch mindestens ein Referenzelement (22) gebildet ist und wobei in dem Hohlraum ein Temperatursensor (23) zur Messung einer Temperatur (T_{B})
und ein Heizelement (24) angeordnet sind, die mit einer Steuereinrichtung (25) gekoppelt sind, wobei die Steuereinrichtung dazu eingerichtet ist, das Heizelement (24) so anzusteuern, dass die Temperatur (T_{B}) einer vorgebbaren Temperatur entspricht;
- eine Anordnung zur Messung einer Temperatur (T_{G}) in dem Gebäude (10) und zur Übertragung eines ermittelten Wertes der Temperatur (T_{G}) in dem Gebäude (10) an die Steuereinrichtung (25); und
- eine Wärmebildkamera (31) zur Aufzeichnung mindestens einen Wärmebilds.

12. System nach Anspruch 11, bei dem die Wärmebildkamera (31) an einer Flugdrohne (30) angeordnet ist.

13. System nach Anspruch 11 oder 12, bei dem die Anordnung mindestens zwei Referenzelemente (22) aufweist.

14. System nach einem der Ansprüche 11 bis 13, bei dem das mindestens eine Referenzelement (22) eine für ein Gebäude (10) geeignete Verglasung aufweist.
